# EUROPEAN PATENT APPLICATION

(11) **EP 4 187 767 A1**
(43) Date of publication of application: **31.05.2023**
(21) Application number: 22209326.2
(22) Date of filing: 24.11.2022
(51) Int. Cl.: H02M 1/44

(54) **ELECTROMAGNETIC INTERFERENCE SUPPRESSION CIRCUIT**

(30) Priority: 24.11.2021 WO PCT/CN2021/132837
(71) Applicant: AnApp Technologies Limited, Pak Shek Kok New Territories (HK)
(72) Inventor: Poon, Franki Ngai Kit, Shatin (HK); Chan, Peter On Bon, Shatin (HK); Tang, Chi Keung, Tai Po (HK)
(74) Representative: Marks & Clerk LLP

(57) **Abstract**

An electromagnetic interference (EMI) suppression circuit for an AC power circuit. The EMI suppression circuit comprises a sensing capacitor circuit arranged to sense an EMI signal on a power line in the AC power circuit; an amplifier circuit operably connected with an output of the sensing capacitor circuit and arranged to provide an EMI compensation signal based on the sensed EMI signal for reducing, or substantially eliminating, the EMI signal on the power line; and a coupling capacitor circuit arranged to be connected between an output of the amplifier circuit and the power line. The EMI suppression circuit further comprises a stabilization circuit connected in series with the coupling capacitor circuit and arranged to be connected between the output of the amplifier circuit and the power line, for reducing instability caused by interaction of the EMI suppression circuit with inductance in an operation environment.

## Description

### TECHNICAL FIELD

This invention relates to suppression of conducted electromagnetic interference (EMI) signals in circuits.

### BACKGROUND

Electromagnetic interference (EMI) suppression is a commonly-used technique for suppressing conducted EMI signals present on power or signal lines of a circuit, e.g., during operation of an electrical device. These conducted EMI signals can be classified into differential mode EMI signals, which are conducted on the power supply and return lines in opposite directions, and common mode EMI signals, which are conducted on the power supply line and the power return line in generally the same direction.

In some applications, the conducted EMI signals generated may have a relatively large magnitude, which can be difficult to suppress or eliminate.

### SUMMARY

In a first aspect, there is provided an electromagnetic interference (EMI) suppression circuit, in particular an active EMI suppression circuit, for an AC power circuit. The EMI suppression circuit includes a sensing capacitor circuit arranged to sense an EMI signal on a power line in the AC power circuit; an amplifier circuit operably connected with an output of the sensing capacitor circuit and arranged to provide an EMI compensation signal based on the sensed EMI signal for reducing, or substantially eliminating, the EMI signal on the power line; and a coupling capacitor circuit arranged to be connected between an output of the amplifier circuit and the power line. The EMI suppression circuit further includes a stabilization circuit connected in series with the coupling capacitor circuit and (together) arranged to be connected between the output of the amplifier circuit and the power line, for reducing instability caused by interaction of the EMI suppression circuit with inductance in an application or operation environment associated with the EMI suppression circuit. The application or operation environment may be, e.g., a switching power converter circuit. The stabilization circuit may prevent unwanted resonance caused by interaction between the EMI suppression circuit and inductive components in the application or operation environment. The stabilization circuit may facilitate control of the loop gain of the EMI suppression circuit so that the loop gain does not exceed a predetermined value. In one example, the stabilization circuit is arranged to control the loop gain to be within 1.

Optionally, the EMI suppression circuit further includes an input filter circuit connected, preferably in series, with the sensing capacitor circuit to at least partly filter AC power frequency and associated harmonics. The arrangement of the input filter circuit in the EMI suppression circuit can help to attenuate, reduce, or substantially eliminate the AC power frequency and associated harmonics, thus preventing the AC power frequency and associated harmonics from reaching the amplifier circuit to undesirably affect its operation (e.g., saturating the amplifier).

The EMI suppression circuit may be arranged to suppress differential mode EMI signals and/or common mode EMI signals, e.g., depending on its connection with the AC power circuit.

The power line to which the sensing capacitor circuit is arranged to connect is where EMI signals may appear, and may be a supply line or a return line (the live line, the neural line, or the earth line). The power line to which the coupling capacitor circuit is arranged to connect is where EMI signals may appear, and may be a supply line or a return line (the live line, the neural line, or the earth line). The power line to which the sensing capacitor circuit is arranged to connect and the power line to which the coupling capacitor circuit is arranged to connect is the same power line.

The sensing capacitor circuit comprises or consists of one or more capacitors. Optionally, the sensing capacitor circuit is connected in series, and optionally directly, between the input filter circuit and the amplifier circuit.

The amplifier circuit comprises or consists of an operational amplifier, which may include an inverting input node, non-inverting input node, output node. Optionally, the sensing capacitor circuit may be connected directly with the non-inverting input node.

The coupling capacitor circuit comprises or consists of one or more capacitors.

In one example, the input filter circuit comprises or consists of a notch filter. In another example, the input filter circuit comprises or consists of a high pass filter. The high pass filter may be first order high pass filter, second order high pass filter, or even higher order high pass filter. Optionally, the high pass filter comprises a first order high pass filter comprises a capacitor circuit, which may comprise or consist of one or more capacitors, and a resistor circuit which may comprise or consist of one or more resistors.

In one example, the stabilization circuit comprises or consists of a resistor circuit, which comprises or consists of one or more damping resistors. Optionally, the resistor circuit is arranged between the output of the amplifier and the coupling capacitor circuit.

In another example, the stabilization circuit comprises or consists of a non-linear blocker circuit. Optionally, the non-linear blocker circuit comprises a resistor circuit and a non-linear circuit connected in parallel, and the non-linear circuit is arranged to conduct (e.g., enable current flow) when a voltage across it is above a predetermined conductive voltage and is arranged to be non-conducting (e.g., prevent current flow) when a voltage across it is below the predetermined conductive voltage. The resistor circuit of the non-linear blocker circuit comprises or consists of one or more resistors. Optionally, the non-linear circuit comprises or consists of a diodic circuit. The diodic circuit comprises or consists of two or more diodes, which may be implemented using two or more rectifier diodes, Schottky diodes, zener diode, diode-connected bipolar transistors, MOSFETs, etc.

In one example, the diodic circuit comprises or consists of a first diode circuit and a second diode circuit connected in parallel, with the first diode circuit selectively permitting current flow in one direction and the second diode circuit selectively permitting current flow in another direction. The first diode circuit comprises or consists of one or more diodes; the second diode circuit comprises or consists of one or more diodes. Optionally, the first diode circuit comprises or consists of a first diode, the second diode circuit comprises or consists of a second diode, and a cathode of the first diode connected to an anode of the second diode and an anode of the first diode connected to a cathode of the second diode. Optionally, the first diode and the second diode have substantially the same forward voltage, which may correspond to (i.e., equals to) the predetermined conductive voltage of the non-linear circuit.

In another example, the diodic circuit comprises or consists of a first Zener diode and a second Zener diode connected back-to-back and in series. The back to back connection may be formed by connecting the anode of the first Zener diode with the anode of the second Zener diode or by connecting the cathode of the first Zener diode with the cathode of the second Zener diode. Optionally, the first Zener diode and the second Zener diode have substantially the same forward diode voltage. Optionally, the first Zener diode and the second Zener diode have substantially the same Zener voltage. Optionally, the sum of one Zener voltage of one of the first Zener diode and the second Zener diode and one forward diode voltage of another one of the first Zener diode and the second Zener diode may correspond to (i.e., equals to) the predetermined conductive voltage of the non-linear circuit.

Optionally, the non-linear blocker circuit further comprises an active circuit for boosting a current drive capability of the non-linear blocker circuit, in particular the non-linear circuit or one that includes a diodic circuit. The boosting may improve current drive capability for a given voltage condition. The active circuit may comprise or consist of a transistor circuit operably connected with the diodic circuit. The transistor circuit may comprise two or more transistors, e.g., BJT or MOS transistors, implemented using/in an emitter follower circuit, a source follower circuit, etc. The active circuit may improve the current driving capability of the amplifier circuit and may improve the slew rate.

Optionally, the EMI suppression circuit further comprises: a resistor circuit connected between an input of the amplifier circuit and an output of the amplifier circuit. The resistor circuit comprises or consists of one or more resistors. The resistor circuit and the sensing capacitor circuit may together define a filter circuit that cooperates with the input filter circuit to provide a filtering effect better than the filtering effect of the input filter circuit alone.

In a second aspect, there is provided an electromagnetic interference (EMI) suppression circuit, in particular an active EMI suppression circuit, of an AC power circuit. The EMI suppression circuit in the second aspect may include the above feature(s) of the EMI suppression circuit of the first aspect.

In a third aspect, there is provided an AC power circuit comprising one or more electromagnetic interference (EMI) suppression circuits of the first aspect.

Optionally, the AC power circuit comprises: an AC power source connector for connecting with an AC power source; and a switching converter for connecting with a load. At least one of the one or more EMI suppression circuits is connected between the AC power source connector and the switching converter.

Optionally, the AC power circuit further comprises a rectifier circuit arranged between the AC power source connector and the switching converter; and/or the AC power source connected at the AC power source connector.

Optionally, at least one of the one or more EMI suppression circuits is connected between the AC power source connector and the rectifier circuit. Optionally, at least one of the one or more EMI suppression circuits is connected between the rectifier circuit and the switching converter.

Optionally, the one or more EMI suppression circuits comprises at least one EMI suppression circuit of the first aspect, connected in the AC power circuit, for suppressing differential mode EMI signals, and at least one EMI suppression circuit of the first aspect, connected in the AC power circuit, for suppressing common mode EMI signals.

In a fourth aspect, there is provided a power circuit comprising one or more electromagnetic interference (EMI) suppression circuits of the first aspect.

In a fifth aspect, there is provided an electrical device comprising one or more electromagnetic interference (EMI) suppression circuits of the first aspect or the AC power circuit of the third aspect.

In a sixth aspect, there is provided a method for suppressing EMI signals in an AC power circuit. The method comprises: sensing, using a sensing means of an EMI suppression circuit, an EMI signal on a power line; and providing, using a compensation means of the EMI suppression circuit, an EMI compensation signal based on the sensed EMI signal for reducing, or substantially eliminating, the EMI signal on the power line. The EMI suppression circuit comprises a stabilization circuit for reducing instability caused by interaction of the EMI suppression circuit with inductance in an operation environment associated with the EMI suppression circuit. The sensing means may be a sensing circuit, a sensing capacitor, etc. The compensation means may be an amplifier circuit, an amplifier, etc. The stabilization circuit may comprise a non-linear blocker circuit, which may include a resistor circuit and a non-linear circuit (e.g., diodic circuit) connected in parallel, and the non-linear circuit is arranged to conduct when a voltage across the non-linear circuit is above a predetermined conductive voltage and is arranged to be non-conducting when a voltage across the non-linear circuit is below the predetermined conductive voltage. The stabilization circuit may prevent unwanted resonance due to interaction of the EMI suppression circuit and inductive components in the application or operation environment.

Optionally, the method further comprises filtering, using a filtering means of the EMI suppression circuit, AC power frequency and associated harmonics. The filtering means may be a filter circuit.

Optionally, the EMI suppression circuit is the EMI suppression circuit of the first aspect.

In a seventh aspect, there is provided a method for making an EMI suppression circuit. The method comprises: providing means for filtering AC power frequency and associated harmonics; providing means for sensing an EMI signal on a power line; providing means for providing an EMI compensation signal based on the sensed EMI signal for reducing, or substantially eliminating the EMI signal on the power line; and providing means for reducing instability caused by interaction of the EMI suppression circuit with inductance in an operation environment associated with the EMI suppression circuit. The means for filtering AC power frequency and associated harmonics may include a filter circuit. The means for sensing the EMI signal may include a sensing circuit. The means for providing EMI compensation signal may include an amplifier circuit. The means for reducing instability may include a stabilization circuit (e.g., a non-linear blocker circuit). Optionally, the EMI suppression circuit is the EMI suppression circuit of the first aspect.

Unless otherwise specified, the terms "connected", "coupled", or the like, are intended encompass both direct and indirect connection and coupling, and may cover mechanical connection and coupling, electrical connection and coupling, or both, whether direct or indirect.

Other features and aspects of the invention will become apparent by consideration of the detailed description and accompanying drawings. Any feature(s) described herein in relation to one aspect or embodiment may be combined with any other feature(s) described herein in relation to any other aspect or embodiment as appropriate and applicable.

### BRIEF DESCRIPTION OF THE DRAWINGS

Embodiments of the invention will now be described, by way of example, with reference to the accompanying drawings in which:
Figure 1 is a circuit diagram of a DC/DC switching power converter circuit including an active EMI suppression circuit.
Figure 2 is a circuit diagram of an AC/DC switching power converter circuit with a passive EMI suppression circuit.
Figure 3A is a circuit diagram of an active EMI suppression circuit arranged to suppress differential mode EMI signals.
Figure 3B is a circuit diagram of an active EMI suppression circuit arranged to suppress differential mode EMI signals.
Figure 3C is a circuit diagram of an active EMI suppression circuit arranged to suppress common mode EMI signals.
Figure 4A is a circuit diagram of an active EMI suppression circuit arranged to suppress differential mode EMI signals in one embodiment of the invention.
Figure 4B is a circuit diagram of an active EMI suppression circuit arranged to suppress common mode EMI signals in one embodiment of the invention.
Figure 4C is a circuit diagram of a portion of an active EMI suppression circuit in one embodiment of the invention.
Figure 4D is a circuit diagram of a portion of an active EMI suppression circuit in one embodiment of the invention.
Figure 5A is a circuit diagram of a portion of an active EMI suppression circuit illustrating a construction of the non-linear blocker circuit in one embodiment of the invention.
Figure 5B is a circuit diagram of a portion of an active EMI suppression circuit illustrating a construction of the non-linear blocker circuit in one embodiment of the invention.
Figure 6A is a circuit diagram of a portion of an active EMI suppression circuit illustrating a construction of the non-linear blocker circuit in one embodiment of the invention.
Figure 6B is a circuit diagram of a portion of an active EMI suppression circuit illustrating a construction of the non-linear blocker circuit in one embodiment of the invention.

### DETAILED DESCRIPTION

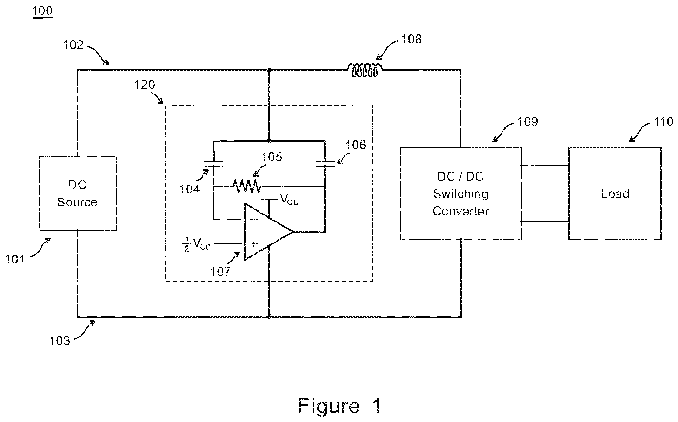

Figure 1 shows a DC/DC switching power converter circuit 100 with an active electromagnetic interference (EMI) suppression circuit 120 arranged between a DC power source 101 and a DC/DC switching converter 109 that is connected with a load 110. The active EMI suppression circuit 120 is arranged to suppress conducted differential mode EMI signals across DC power lines 102 and 103 supplied by the DC source 101. The active EMI suppression circuit 120 includes a sensing capacitor 104, a feedback resistor 105, an operational amplifier 107, and a coupling capacitor 106 operably connected with each other. The positive DC power line 102 provides an EMI signal sensing and EMI compensation signal coupling node. The negative DC power line 103 of the DC source 101 provides a reference node. The active EMI suppression circuit 120 is connected across these two nodes.

The sensing capacitor 104 is connected between the EMI signal sensing and EMI compensation signal coupling node and the inverting input of the operational amplifier 107. The resistor 105 is connected between the inverting input and the output of the operational amplifier. The operational amplifier 107 is connected to a power supply, with a positive power supply side Vcc, and a negative power supply side connected to the negative DC power line 103. The non-inverting input of the operational amplifier 107 is connected at 1/2Vcc. The coupling capacitor 106 is connected between the output of the operational amplifier 107 and the EMI signal sensing and EMI compensation signal coupling node. An inductor 108 is connected on the positive DC power line 102, between the EMI signal sensing and EMI compensation signal coupling node and the DC/DC switching converter 109.

In operation, EMI signal on the positive DC power line 102 is sensed by the sensing capacitor 104 and is coupled to the inverting input of the operational amplifier 107 via the sensing capacitor 104. Based on the sensed EMI signal the operational amplifier 107 provides, at its output, a compensation signal to drive the positive DC power line 102 via the coupling capacitor 106 to cancel the EMI signal at the positive DC power line 102 such that the EMI signal across the positive DC power line 102 and the negative DC power line 103 (or across the DC source) is substantially eliminated. The resistor 105 provides a DC feedback path between the inverting input and the output of the operational amplifier 107 for setting the DC operating point.

In this example, the active EMI suppression circuit 120 can be considered as a capacitor having a much larger value compared with the original value of the coupling capacitor 106 at the EMI signal band.

In some other implementations, the active EMI suppression circuit 120 may instead be connected to circuit 100 using the positive DC power line 102 as reference node and the negative DC supply line 103 as the EMI signal sensing and EMI compensation signal coupling node. In some other implementations, in the active EMI suppression circuit 120, the original positive supply side V_{CC} of the operational amplifier 107 may be selected as the reference node while the negative power supply side of the operational amplifier 107 may be connected to a -V_{CC}. In such case, the non-inverting input of the operational amplifier 107 is connected to -1/2V_{CC}.

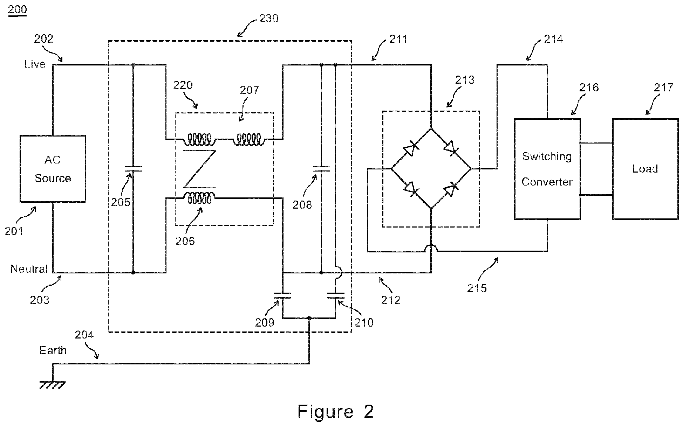

Figure 2 shows an AC/DC switching power converter circuit 200 with a passive EMI suppression circuit 230 arranged between an AC power source 201 and a switching converter 216 that is connected to a load 217. More specifically, the passive EMI suppression circuit 230 is arranged between the AC source 201 and a rectifier circuit (diode bridge) 213 (which is located between the power source 201 and the switching converter 216). The passive EMI suppression circuit 230 is arranged to suppress conducted differential mode EMI signals across the AC power lines (live line and neutral line) 202, 203 supplied by the AC source 201 as well as common mode EMI signals across the live line 202 and the earth line 204 and across the neutral line 203 and the earth line 204.

The passive EMI suppression circuit 230 includes two differential mode filter capacitors ("X-capacitors") 205, 208, a common mode choke (CMC) 220, and two common mode filter capacitors ("Y-capacitors") 209, 210. In Figure 2, the CMC 220 is modelled and illustrated as an ideal CMC 206 connected in series with an inductor 207 that represents the leakage inductance of the CMC 220.

In Figure 2, the differential mode filter capacitor 205 is connected across the live and neutral lines 202, 203 between the AC source 201 and the CMC 220. The differential mode filter capacitor 208 is connected across the power lines 211, 212 to the diode bridge 213 between the CMC 220 and the diode bridge 213. The CMC 220 is connected between the two differential mode filter capacitors. The common mode filter capacitor 209 is connected between the power line 212 and the earth line 204. The common mode filter capacitor 210 is connected across the power line 212 and the earth line 204.

In operation, conducted differential mode EMI signals at the input to the diode bridge 213 of the AC/DC switching power converter circuit 200 are suppressed by a PI-type filter, which is formed by the differential mode filter capacitors 205, 208 and the series-connected inductor 207 (of the CMC 220). As a result differential mode EMI signals at the power lines (live and neutral lines) 202, 203 can be suppressed, e.g., to a level within compliance limit.

In operation, conducted common mode EMI signals between both the power lines 211, 212 at the input to the diode bridge 213 of the AC/DC switching power converter circuit 200 and an earth line 204 of AC/DC switching power converter circuit 200 are suppressed by a L-type filter, which is formed by the common mode filter capacitors 209, 210 and the CMC 206 (of the CMC 220). As a result, common mode EMI signals between the power lines (live and neutral lines) 202, 203 and the earth line 204 can be suppressed, e.g., to a level within compliance limit.

In some other implementations, the passive EMI suppression circuit 230 can instead be connected between the diode bridge 213 and the switching converter 216. In some other implementations, the passive EMI suppression circuit 230 can be modified to include additional filter section(s). This maybe useful in cases where the EMI signals are strong and that the passive EMI suppression circuit 230 alone is unable to satisfactorily reduce the EMI level, e.g., to bring the EMI level to within compliance limit.

The active EMI suppression circuit 120 in Figure 1 and the passive EMI suppression circuit 230 in Figure 2 are not part of the present invention.

The inventors of the present invention have realized, through research, experiments, and trials, that the EMI suppression performance in the AC/DC switching power converter circuit 200, or more generally in some AC power circuits, can be improved by using an active EMI suppression circuit. In particular, the inventors of the present invention have devised that the use of an active EMI suppression circuit can boost the capacitance of differential mode filter capacitors and common mode filter capacitors, such as those in the AC/DC switching power converter circuit 200 in Figure 2. In case for a differential mode filter capacitor, the use of an appropriate active EMI suppression circuit may help to reduce the require capacitance value of the differential mode filter capacitor, hence reducing size and cost of the circuit in which the differential mode filter capacitors is arranged and improving the frequency response (as a smaller differential mode filter capacitor has higher self-resonant frequency (SRF)). In case for a common mode filter capacitor, safety compliance requirement may limit the maximum capacitance value of common mode filter capacitor in switching converters. The use of an appropriate active EMI suppression circuit may help to increase the equivalent capacitance value of the common mode filter capacitor, hence reducing the inductance value of the CMC. Reducing the inductance value of the CMC helps to reduce size, weight, cost and to improve the frequency response (as a smaller CMC has a higher self-resonant frequency (SRF)).

However, the inventors of the present invention have also devised that the active EMI suppression circuit 120 cannot be directly used to replace differential mode filter capacitors and common mode filter capacitors, such as the differential mode filter capacitors 205, 208 and the common mode filter capacitors 209, 210 in Figure 2, due to the presence of large AC line voltage (e.g., up to 270 VAC) of the AC power source (typically 50/60 Hz), which can reduce the dynamic range of, or even saturate, an amplifier circuit, such as the operational amplifier 107. If the active EMI suppression circuit 120 is directly applied to the circuit 200, then the high AC voltage on the power line of the circuit 200 may also be sensed by the sensing capacitor 104. In one example, the voltage of the AC source 201 can be 265 volts at 50 Hz at the power line. If the active EMI suppression circuit 120 is directly applied to the circuit 200, the high pass filter formed by sensing capacitor 104 and DC stabilizing resistor 105 will attenuate this line frequency signal, and its level of attenuation depends on the cut-off frequency chosen for such high pass filter. Since the compliance requirement of conducted EMI typically starts at 150 kHz, the frequency response of the high pass filter needs to provide near zero phase shift at 150 kHz, which means the cut off frequency is approximately 2 decades below, or around 1.5 kHz. By selecting 2 kHz as the cut off frequency, the suppression at 50Hz for a first order filter is 32 dB, or the 50Hz AC signal is reduced by 40 times. However, for a 265 VAC at 50 Hz, the peak voltage is approximately 375 Volts, and the peak-to-peak voltage is approximately 750 Volts. Reduction of the AC signal by 40 times means 18.75 Volts peak to peak. This value exceeds the typical operating voltage of operational amplifier 107. Placing the active EMI suppression circuit 120 between the diode bridge 213 and switching converter 216 will not alleviate the problem because while the peak-to-peak voltage is reduced to half of the original value, the 50Hz fundamental frequency is doubled to 100Hz, which may worsen the situation. The inventors of the present invention have also realized that the replacement of the differential mode filter capacitors 205, 208 and/or the common mode filter capacitors 209, 210 with the active EMI suppression circuit 120 in the circuit of Figure 2 will make the active EMI suppression circuit unstable due to potential resonance as a result of the presence of the inductance 207 in differential mode, the CMC 206 in common mode, and the equivalent resistance of the line impedance stabilizing network (LISN) in EMI measurement set up.

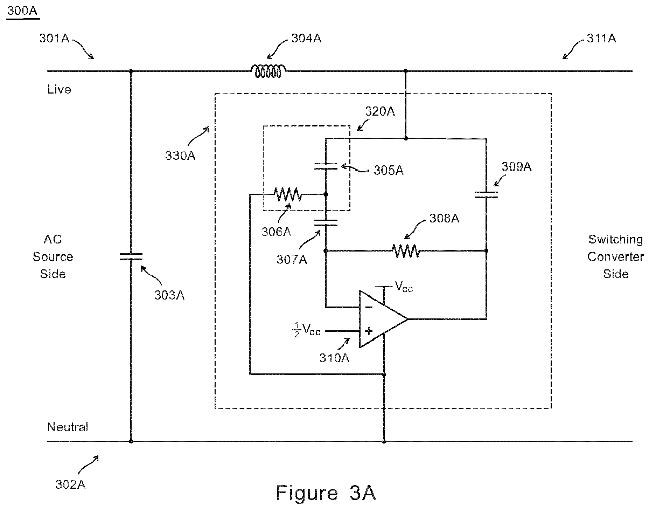

Figure 3A illustrates an AC power circuit 300A including an active EMI suppression circuit 330A in one embodiment of the invention. The active EMI suppression circuit 330A may be used to replace each of the differential mode filter capacitors 205, 208 in the circuit 200 of Figure 2, or more generally, be used as a differential mode filter capacitor in power circuits.

In Figure 3A, the AC power circuit 300A includes, between the AC source side and the switching converter side: an inductor 304A that generally corresponds to the leakage inductance 207 in Figure 2, a differential mode filter capacitor 303A that generally corresponds to the differential mode filter capacitor 205 in Figure 2, and an active EMI suppression circuit 330A that replaces the differential mode filter capacitor 208 in Figure 2. The active EMI suppression circuit 330A generally corresponds to the active EMI suppression circuit 120 in Figure 1, but with the addition of an input filter circuit 320A.

More specifically, the active EMI suppression circuit 330A includes an input filter circuit 320A, a sensing capacitor 307A, a feedback resistor 308A, an operational amplifier 310A, and a coupling capacitor 309A operably connected with each other. The power line 311A provides an EMI signal sensing and EMI compensation signal coupling node. The power line 302A provides a reference node. The active EMI suppression circuit 330A is connected across these two nodes or the two power lines 311A, 302A.

The input filter circuit 320A is a first order high pass filter and includes a capacitor 305A and a resistor 306A. The input filter circuit 320A is connected, in series, between the EMI signal sensing and EMI compensation signal coupling node and the sensing capacitor 307A. The input filter circuit 320A is also connected between the EMI signal sensing and EMI compensation signal coupling node and negative power supply side of the operational amplifier 310A which serves as the reference node. The sensing capacitor 307A is connected between the input filter circuit 320A and the inverting input of the operational amplifier 310A. The resistor 308A is connected between the inverting input and the output of the operational amplifier 310A. The operational amplifier 310A is connected to a power supply, with a positive power supply side Vcc, and a negative power supply side connected to the power line 302A. The non-inverting input of the operational amplifier 310A is connected at 1/2Vcc. The coupling capacitor 309A is connected between the output of the operational amplifier 310A and the EMI signal sensing and EMI compensation signal coupling node.

In operation, the input filter circuit 320A reduces or attenuates AC line frequency to prevent the high AC line voltage from entering the operational amplifier 310A to saturate it. More specifically, the input filter circuit 320A, which is a first order high pass filter in this example, along with the sensing capacitor 307A that senses the EMI signal on the line 311A, and the resistor 308A, provide a second order high pass filter that sufficiently attenuate the high AC line voltage and associated harmonics from the AC source to prevent saturating the operational amplifier 310A. In one example, selecting the cut off frequency of the filter at 2kHz will offer 64dB attenuation for the line frequency and therefore the AC high voltage appears at the operational amplifier 310A can be reduced to less than 0.5-volt peak to peak. The sensing capacitor 307A senses the EMI signal on the line 311A. Based on the sensed EMI signal the operational amplifier 310A provides, at its output, a compensation signal to drive the power line 311A via the coupling capacitor 309A to cancel the EMI signal at the line 311A such that the EMI signal across the line 311A and the line 302A (or across the AC source) is substantially eliminated. The resistor 308A provides a feedback path between the inverting input and the output of the operational amplifier 107 for setting of DC operating point.

In some other implementations, the active EMI suppression circuit 330A may instead be connected to circuit 300A using the power line 311A as reference node and the power line 302A as the EMI signal sensing and EMI compensation signal coupling node. In some other implementations, in the active EMI suppression circuit 330A, the original positive supply side V_{CC} of the operational amplifier 310A may be selected as the reference node while the negative power supply side of the operational amplifier 310A may be connected to a -V_{CC}. In such case, the non-inverting input of the operational amplifier 310A is connected to -1/2V_{CC}.

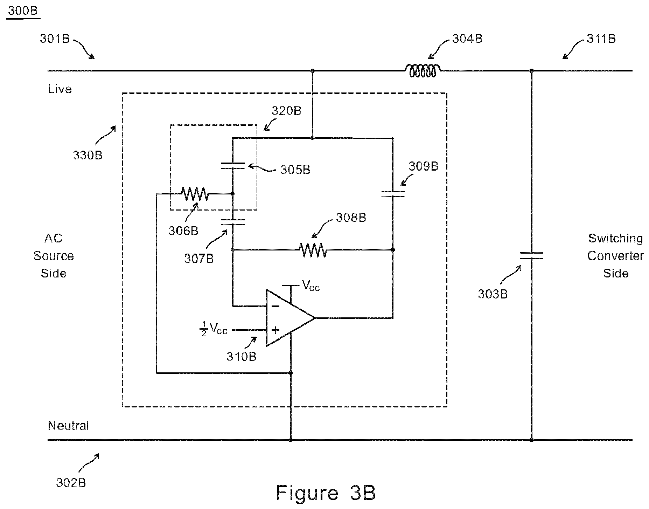

Figure 3B illustrates an AC power circuit 300B including an active EMI suppression circuit 330B in one embodiment of the invention. The active EMI suppression circuit 330B may be used to replace each of the differential mode filter capacitors 205, 208 in the circuit 200 of Figure 2, or more generally, be used as a differential mode filter capacitor in power circuits. The active EMI suppression circuit 330B is substantially the same as the active EMI suppression circuit 330A in Figure 3A, except that the active EMI suppression circuit 330B is located before the inductor 304B, across the lines 301B and 302B. The structure of the active EMI suppression circuit 330B is substantially the same as the active EMI suppression circuit 330A in Figure 3A.

In the circuits 300A, 300B, an LC circuit formed by the inductor 304A and the capacitor 303A, and by the inductor 304B and the capacitor 303B, is inductive in nature above its series resonant frequency whereas the active EMI suppression circuits 330A, 330B are capacitive in nature. As a result, a parallel resonant circuit may be formed between the power lines 301A and 302A, or between the power lines 301B and 302B. In most applications the resonance effect produced by such parallel resonant circuit may cause instability hence may be undesirable.

It should be noted that the circuits in Figures 3A and 3B may include a CMC corresponding to the CMC 206 in Figure 2. However, since the CMC has little effect for differential mode EMI signal, it is not shown in Figures 3A and 3B.

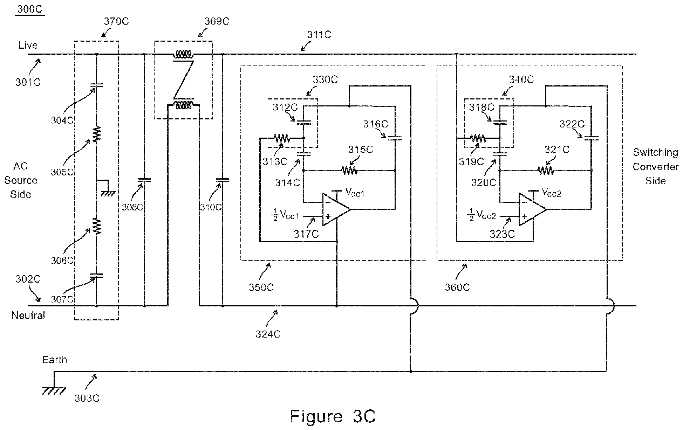

Figure 3C illustrates an AC power circuit 300C including two active EMI suppression circuits 350C, 360C in one embodiment of the invention. The active EMI suppression circuits 350C, 360C may be used to replace the common mode filter capacitors 209, 210 in the circuit 200 of Figure 2, or more generally, be used as common mode filter capacitors in power circuits.

In Figure 3C, the AC power circuit 300C includes, between the AC source side and the switching converter side: a line impedance stabilizing network (LISN) 370C connected across the live and neural lines 301C, 302C, two differential mode filter capacitors 308C, 310C that correspond to the differential mode filter capacitors 205, 208 in Figure 2, a common mode choke (CMC) 309C arranged between the two differential mode filter capacitors 308C, 310C and that generally corresponds to the CMC 220 in Figure 2, and two active EMI suppression circuits 350C, 360C that correspond to the common mode filter capacitors 209, 210 in Figure 2. Each of the active EMI suppression circuits 350C, 360C generally correspond to the active EMI suppression circuit 120 in Figure 1, but with the addition of an input filter circuit 330C, 340C.

More specifically, the active EMI suppression circuits 350C, 360C each include an input filter circuit 330C, 340C, a sensing capacitor 314C, 320C, a feedback resistor 315C, 321C, an operational amplifier 317C, 323C, and a coupling capacitor 316C, 322C operably connected with each other. For the active EMI suppression circuits 350C, the power line 303C provides an EMI signal sensing and EMI compensation signal coupling node. The power line 324C provides a reference node. The active EMI suppression circuits 350C is connected across these two nodes or the two power lines 324C, 303C. For the active EMI suppression circuits 360C, the power line 303C provides an EMI signal sensing and EMI compensation signal coupling node. The power line 311C provides a reference node. The active EMI suppression circuits 360C is connected across the two power lines 311C, 303C.

The input filter circuit 330C is a first order high pass filter and includes a capacitor 312C and a resistor 313C. The input filter circuit 330C is connected, in series, between the EMI signal sensing and EMI compensation signal coupling node on line 303C and the sensing capacitor 314C. The sensing capacitor 314C is connected between the input filter circuit 330C and the inverting input of the operational amplifier 317C. The resistor 315C is connected between the inverting input and the output of the operational amplifier 317C. The operational amplifier 317C is connected to a power supply, with a positive power supply side Vcci, and a negative power supply side connected to the power line 324C. The non-inverting input of the operational amplifier 317C is connected at 1/2Vcc1. The coupling capacitor 316C is connected between the output of the operational amplifier 317C and the EMI signal sensing and EMI compensation signal coupling node on line 303C.

In operation, the input filter circuit 330C reduces or attenuates AC line frequency to prevent the high AC line voltage from entering the operational amplifier 317C to saturate it. More specifically, the input filter circuit 330C, which is a first order high pass filter in this example, along with the sensing capacitor 314C that senses the EMI signal on the line 303C, and the resistor 315C, provide a second order high pass filter that sufficiently attenuate the high AC line voltage and associated harmonics from the AC source to prevent saturating the operational amplifier 317C. The sensing capacitor 314C senses the EMI signal on the line 303C. Based on the sensed EMI signal the operational amplifier 317C provides, at its output, a compensation signal to drive the power line 303C via the coupling capacitor 316C to cancel the EMI signal at the line 303C such that the EMI signal in the line 303C is substantially eliminated. The resistor 315C provides a feedback path between the inverting input and the output of the operational amplifier 317C for setting of DC operating point.

The construction of the active EMI suppression circuit 360C is substantially the same as the construction of the active EMI suppression circuit 350C.

In the circuit 300C of this embodiment, V_{CC}1 and V_{CC}2 are at different levels (e.g., by using different power sources for the active EMI suppression circuits 350C and 360C respectively since they have different reference nodes). The nodes on lines 311C and 324C are effectively AC shorted by the capacitor 310C hence in some implementations the use of only one of the active EMI suppression circuits 350C, 360C in the circuit 300C is sufficient to achieve the intended effect.

In the circuit 300C, the line impedance stabilizing network (LISN) 370C connected to the live line 301C, the neutral line 302C and the earth line 303C is used for EMC compliance test. The LISN 370C comprises a capacitor 304C and a resistor 305C connected in series, with the capacitor terminal of the series RC circuit connected to live line 301C and resistor terminal of the series RC circuit connected to the earth line 303C; and a capacitor 307C and a resistor 306C connected in series, with the capacitor terminal of the series RC circuit connected to neutral line 302C and resistor terminal of the series RC circuit connected to the earth line 303C. This provides return path for the CMC 309C to earth line 303C that serves as the sensing node of common mode EMI. LISN is not shown in the circuits 300A, 300B in Figures 3A and 3B because it may be ignored for circuit analysis - the equivalent impedance between live and neutral lines of the LISN is around 100 Ohms, which is typically orders of magnitude higher than the impedance of the differential mode filter capacitor connected across the LISN in the conducted EMI compliance measurement frequency band.

In the circuit 300C, a series LCR circuit formed by the single sided inductor of the CMC 309C at the neutral line 302C side, and the capacitor 307C and the resistor 306C of the LISN 370C, is inductive in nature above its series resonant frequency whereas the active EMI suppression circuit 350C is capacitive in nature. As a result, a parallel resonant circuit is formed between circuit nodes on lines 324C and 303C. In some applications the resonance effect produced by such parallel resonant circuit may be acceptable whereas in some other applications the resonance effect produced by such parallel resonant circuit may be undesirable. Similarly, a series LCR circuit formed by the single sided inductor of the CMC 309C at the live line 301C side, and the capacitor 304C and the resistor 305C of the LISN 370C, is inductive in nature above its series resonant frequency whereas the active EMI suppression circuit 360C is capacitive in nature. As a result, a parallel resonant circuit is formed between circuit nodes on lines 311C and 303C. In some applications the resonance effect produced by such parallel resonant circuit may be acceptable whereas in some other applications the resonance effect produced by such parallel resonant circuit may be undesirable.

It should be noted that the circuit in Figure 3C may include differential inductance corresponding to inductor 207 in Figure 2. However, since the differential inductance has little effect for common mode EMI signal, it is not shown in Figure 3C.

As discussed above, the application of active EMI suppression circuits 330A, 330B, 350C, 360C to replace the differential mode filter capacitors and the common mode filter capacitors may introduce instability due to resonance effect, mainly LC parallel resonance, produced by the equivalent circuit.

The inventors of the present invention have realized, through research, experiments, and trials, that in the frequency response of typical parallel LC circuit, peaking effect occurs for gain around the resonant frequency, and a sudden phase change of 180 degrees occurs at the parallel resonant frequency that generally corresponds to the change over from inductive at frequencies below resonance to capacitive at frequencies above resonance. The inventors have thus realized that it would be difficult to achieve stability in the circuit unless some means of gain and/or damping control is included. The instability near parallel resonance may also be considered as over-compensation in time domain for signals near the resonance. This means the output of the operational amplifiers in the active EMI suppression circuits 330A, 330B, 350C, 360C at frequencies near the resonance provides a compensation signal larger than necessary, and this effect propagates round the circuit loop to create instability.

To suppress this instability, the inventors of the present invention have devised a stabilization circuit, as detailed below.

In one embodiment, the stabilization circuit is a resistor circuit with one or more damping resistors of appropriate resistance value, is included between the output of the operational amplifier and the coupling capacitor in the active EMI suppression circuits 330A, 330B, 350C, 360C. In some applications, however, the introduction of the resistor circuit will introduce a penalty of reducing the effectively driving capability of the operational amplifier. This may cause a reduction, e.g., a substantial reduction, of slew rate and hence reduce the ability of the circuit to follow the fast-changing input EMI signal.

To address this potential issue, in another embodiment, the stabilization circuit is a non-linear blocker circuit. The non-linear blocker circuit can provide damping for output swing equal or slightly (e.g., 10%) higher than the maximum over-compensation amount V_{c} while enabling conduction of output signal higher than V_{c} at both directions. In one example, the non-linear blocker circuit is arranged such that the loop gain of the active EMI suppression circuit from EMI signal sensed from the power line to the compensation signal coupling back to the power line will not exceed 1.

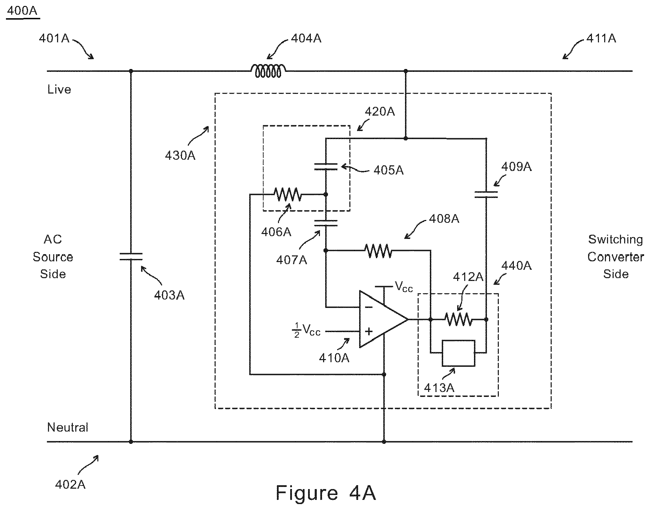

Figure 4A illustrates an AC power circuit 400A including an active EMI suppression circuit 430A in one embodiment of the invention. The active EMI suppression circuit 430A may be used to replace each of the differential mode filter capacitors 205, 208 in the circuit 200 of Figure 2, or more generally, be used as a differential mode filter capacitor in power circuits.

In Figure 4A, the AC power circuit 400A includes, between the AC source side and the switching converter side: an inductor 404A that generally corresponds to the inductor 304A in Figure 3A, a differential mode filter capacitor 403A that generally corresponds to the differential mode filter capacitor 303A in Figure 3A, and an active EMI suppression circuit 430A that replaces the active EMI suppression circuit 330A in Figure 3A. The active EMI suppression circuit 430A is substantially the same as the active EMI suppression circuit 330A in Figure 3A, but with the addition of a non-linear blocker circuit 440A between the output of the operational amplifier 410A and the coupling capacitor 409A to stabilize the circuit 430A. For simplicity, a detailed description of the active EMI suppression circuit 430A, in particular the parts same as the active EMI suppression circuit 330A, is not provided here.

In this embodiment, the non-linear blocker circuit 440A comprises a resistor circuit with a damping resistor 412A and a non-linear circuit 413A connected with the resistor circuit in parallel. The non-linear circuit 413A is open (e.g., not conducting) when voltage across it is below a conduction voltage V_{c} and closed (e.g., conducting) when voltage across it is above a conduction voltage V_{c} in both directions. The damping resistor 412A provides a conduction path when the signal voltage across the non-linear blocker circuit 440A is below the conduction voltage V_{c}.

In the circuit 400A of Figure 4A, the feedback resistor 408A may be connected between the inverting input of the operational amplifier 410A and the output of the operational amplifier 410A. In another embodiment, the feedback resistor 408A may be connected between the inverting input of the operational amplifier 410A and the series connecting node that is between the non-linear blocker circuit 440A and the coupling capacitor 409A.

It should be noted that the circuit in Figure 4A may include a CMC corresponding to the CMC 206 in Figure 2. However, since the CMC has little effect for differential mode EMI signal, it is not shown in Figure 4A.

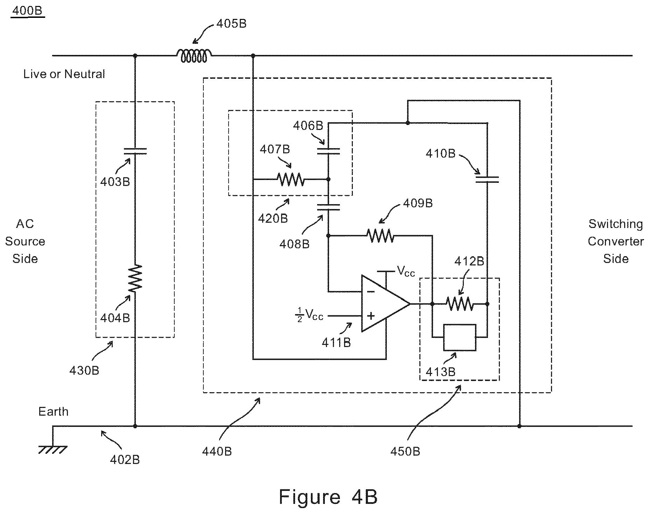

Figure 4B illustrates an AC power circuit 400B including an active EMI suppression circuit 440B in one embodiment of the invention. The active EMI suppression circuit 440B may be used to replace each of the common mode filter capacitors 209, 210 in the circuit 200 of Figure 2, or more generally, be used as a common mode filter capacitor in power circuits.

In Figure 4B, the AC power circuit 400B includes, between the AC source side and the switching converter side: a LISN circuit 430B (with resistor 404B and capacitor 403B) that generally corresponds to the LISN 370C in Figure 3C, an inductor 405B that generally corresponds to the inductor (of the CMC 309C) in Figure 3C, and an active EMI suppression circuit 440B that generally corresponds to the active EMI suppression circuit 360C in Figure 3C. The active EMI suppression circuit 440B is substantially the same as the active EMI suppression circuit 360C in Figure 3C, but with the addition of a non-linear blocker circuit 450B between the output of the operational amplifier 411B and the coupling capacitor 410B to stabilize the circuit 440B. For simplicity, a detailed description of the active EMI suppression circuit 440B is not provided here.

In this embodiment, the non-linear blocker circuit 450B comprises a resistor circuit with a damping resistor 412B and a non-linear circuit 413B connected with the resistor circuit in parallel. The non-linear circuit 413B is open (e.g., not conducting) when voltage across it is below a conduction voltage V_{c} and closed (e.g., conducting) when voltage across it is above a conduction voltage V_{c} in both directions. The damping resistor 412B provides a conduction path when the signal voltage across the non-linear blocker circuit 450B is below the conduction voltage V_{c}.

In the circuit 400B of Figure 4B, the feedback resistor 409B may be connected between the inverting input of the operational amplifier 411B and the output of the operational amplifier 411B. In another embodiment, the feedback resistor 409B may be connected between the inverting input of the operational amplifier 411B and the series connecting node that is between the non-linear blocker circuit 450B and the coupling capacitor 410B.

It should be noted that the circuit in Figure 4B may include differential inductance corresponding to inductor 207 in Figure 2. However, since the differential inductance has little effect for common mode EMI signal, it is not shown in Figure 4B.

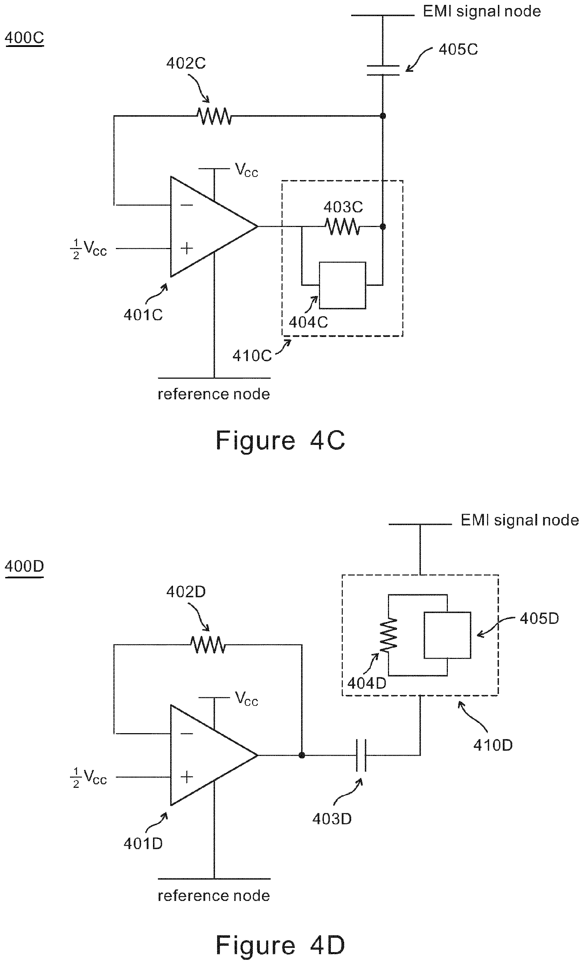

Figure 4C illustrates a simplified circuit diagram showing only a portion of a circuit 400C with a non-linear blocker circuit 410C (with a resistor 403C and a non-linear circuit 404C).

In Figure 4C, the operational amplifier 401C generally corresponds to operational amplifier 410A in Figure 4A and the operational amplifier 411B in Figure 4B, the resistor 402C generally corresponds to the resistor 408A in Figure 4A and resistor 409B in Figure 4B, non-linear blocker circuit 410C generally corresponds to non-linear blocker circuit 440A in Figure 4A and non-linear blocker circuit 450B in Figure 4B, and the coupling capacitor 405C generally corresponds to the coupling capacitor 409A in Figure 4A and the coupling capacitor 410B in Figure 4B.

In some embodiments, the location or connection of the non-linear blocker circuit 440A and the coupling capacitor 409A may be exchanged. In some embodiments, the location or connection of the non-linear blocker circuit 450B and the coupling capacitor 410B may be exchanged.

Figure 4D illustrates a simplified circuit diagram showing only a portion of a circuit 400D with a non-linear blocker circuit 410D (with a resistor 404D and a non-linear circuit 405D).

In Figure 4D, the operational amplifier 401D generally corresponds to the operational amplifier 410A in Figure 4A and the operational amplifier 411B in Figure 4B, the resistor 402D generally corresponds to the resistor 408A in Figure 4A and the resistor 409B in Figure 4B, the non-linear blocker circuit 410D generally corresponds to the non-linear blocker circuit 440A in Figure 4A and the non-linear blocker circuit 450B in Figure 4B, and the coupling capacitor 403D generally corresponds to the coupling capacitor 409A in Figure 4A and the coupling capacitor 410B in Figure 4B.

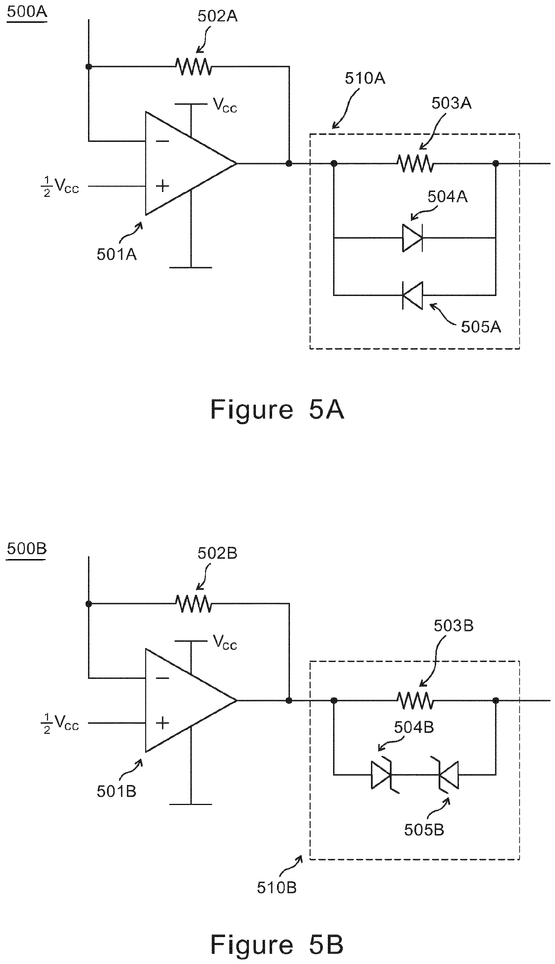

Figure 5A illustrates an embodiment of the non-linear blocker circuits 440A, 450B, 410C, 410D. In Figure 5A, the non-linear blocker circuit 510A comprises a first diode 504A and a second diode 505A and a resistor 503A connected in parallel with each other. The first and second diodes 504A, 505A provide a non-linear circuit whereas the resistor 503A provides a resistor circuit. In Figure 5A, the anode of the first diode 504A is connected to the cathode of a second diode 505A, and the cathode of the first diode 504A is connected to the anode of a second diode 505A. The forward voltages for both diodes 504A and 505A is equal and is selected to be equal to the conduction voltage V_{c} of the non-linear circuit. In some implementations, if the forward voltage cannot be obtained by a single diode, then it may be obtained by series connection of one or more diode(s) with same or different individual forward voltage(s).

Figure 5B illustrates an embodiment of the non-linear blocker circuits 440A, 450B, 410C, 410D. In Figure 5B, the non-linear blocker circuit 510B comprise a first Zener diode 504B in series with a second Zener diode 505B in a back-to-back manner (cathode-to-cathode), and a resistor 503B connected in parallel with the back-to-back-connected Zener diodes. The back-to-back-connected Zener diodes 504B, 505B provide a non-linear circuit whereas the resistor 503B provides a resistor circuit. The Zener voltages for both Zener diodes 504B and 505B maybe equal while the sum of the Zener voltage and forward voltage of the diode is selected to be equal to the conduction voltage V_{c} of the non-linear circuit. In some implementations, the Zener diodes 504B and 505B may be connected in another back-to-back manner (anode-to-anode).

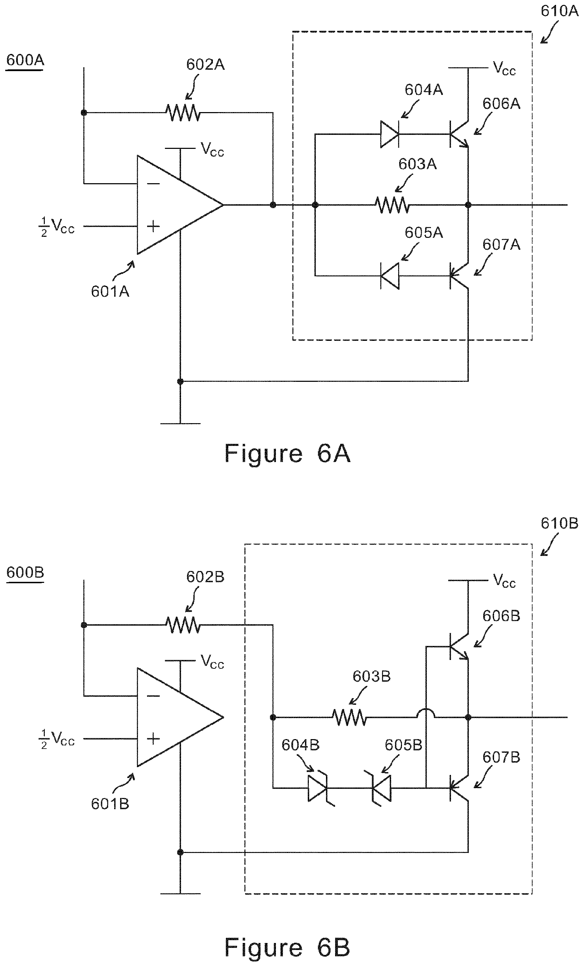

Figure 6A illustrates an embodiment of the non-linear blocker circuits 440A, 450B, 410C, 410D. In Figure 6A, the non-linear blocker circuit 610A is a modified version of non-linear blocker circuit 510A, with the use of an additional active circuit. The active circuit can also be referred to as an active current buffer, and is for boosting a current drive capability of the non-linear blocker circuit at a given voltage condition. In this embodiment, the active current buffer is implemented by two emitter follower circuit transistors 606A, 607A. The transistors 606A, 607A are connected across power supply Vcc and negative power supply of the operational amplifier 601A. The transistor 606A is connected with diode 604A whereas the transistor 607A is connected with diode 605A for respectively controlling the operation of the diodes 604A, 605A. In some implementations, the active current buffer maybe implemented by source follower circuit using MOS transistors.

Figure 6B illustrates an embodiment of the non-linear blocker circuits 440A, 450B, 410C, 410D. In Figure 6B, the non-linear blocker circuit 610B is a modified version of non-linear blocker circuit 510B, with an additional active circuit. The active circuit can also be referred to as an active current buffer, and is for boosting a current drive capability of the non-linear blocker circuit at a given voltage condition. In this embodiment, the active current buffer is implemented by two emitter follower circuit transistors 606B, 607B. The transistors 606B, 607B are connected across power supply Vcc and negative power supply of the operational amplifier 601B. The transistors 606B, 607B together control the operation (e.g., conduction) of the Zener diodes 604B, 605B. In some implementations, the active current buffer maybe implemented by source follower circuit using MOS transistors.

The use of active current buffer in the embodiments of Figures 6A and 6B may increase in current driving capability over the original driving of the associated operation amplifier (at the same voltage condition) hence improving the slew rate.

As will be readily understood by the person skilled in the art, as used herein, common mode choke (CMC) may be referred to as common mode inductor or common mode inductance; X-capacitor may be referred to as differential mode filter capacitor; Y-capacitor may be referred to as common mode filter capacitor, etc.

It will be appreciated by persons skilled in the art that numerous variations and/or modifications may be made to the invention as shown in the specific embodiments to provide other embodiments of the invention. The described embodiments of the invention should therefore be considered in all respects as illustrative, not restrictive.

For example, the EMI suppression circuit of the invention, such as the embodiments in Figures 3A to 6B, can be incorporated into the AC power circuit of Figure 2 or other AC power circuits not specifically illustrated or described. The EMI suppression circuit of the invention, such as the embodiments in Figures 3A to 6B, may also be suitable for use or be used in DC power circuits, AC-DC power circuits, etc. In various EMI suppression circuit embodiments, a resistor may be implemented using a resistor circuit having among other circuit components one or more resistors; a capacitor may be implemented using a capacitor circuit having among other circuit components one or more capacitors; an inductor may be implemented using an inductive circuit having among other circuit components one or more inductors. In various EMI suppression circuit embodiments, a diode may be implemented using a diodic circuit having among other circuit components one or more diodes, which may be implemented using, e.g., rectifier diode, Schottky diode, Zener diode, diode connected bipolar transistor, and/or MOSFET, as appropriate and applicable; an amplifier may be implemented with an amplifier circuit having, among other circuit components one or more amplifiers such as operation amplifiers. The input filter circuit in the EMI suppression circuit of the invention, such as in the embodiments in Figures 3A to 6B, can be high pass filter (any order), notch filter, etc., implemented using appropriate circuit components.

## Claims

1. An EMI suppression circuit for an AC power circuit, comprising:
a sensing capacitor circuit arranged to sense an EMI signal on a power line in the AC power circuit;
an amplifier circuit operably connected with an output of the sensing capacitor circuit and arranged to provide an EMI compensation signal based on the sensed EMI signal for reducing, or substantially eliminating, the EMI signal on the power line; and
a coupling capacitor circuit arranged to be connected between an output of the amplifier circuit and the power line;
wherein the EMI suppression circuit further comprises a stabilization circuit connected in series with the coupling capacitor circuit and arranged to be connected between the output of the amplifier circuit and the power line, for reducing instability caused by interaction of the EMI suppression circuit with inductance in an operation environment associated with the EMI suppression circuit.

2. The EMI suppression circuit of claim 1, wherein the EMI suppression circuit further comprises: an input filter circuit connected with the sensing capacitor circuit to at least partly filter AC power frequency and associated harmonics;
preferably, wherein the input filter circuit comprises a notch filter;
preferably, wherein the input filter circuit comprises a high pass filter; and
preferably, wherein the high pass filter comprises a first order high pass filter including a capacitor circuit and a resistor circuit.

3. The EMI suppression circuit of claim 2, wherein the sensing capacitor circuit is connected in series between the input filter circuit and the amplifier circuit.

4. The EMI suppression circuit of claim 1, wherein the stabilization circuit comprises a resistor circuit with one or more damping resistors.

5. The EMI suppression circuit of claim 1, wherein the stabilization circuit comprises a non-linear blocker circuit; and
preferably, wherein the non-linear blocker circuit comprises a resistor circuit and a non-linear circuit connected in parallel, and the non-linear circuit is arranged to conduct when a voltage across the non-linear circuit is above a predetermined conductive voltage and is arranged to be non-conducting when a voltage across the non-linear circuit is below the predetermined conductive voltage.

6. The EMI suppression circuit of claim 5, wherein the non-linear circuit comprises a diodic circuit.

7. The EMI suppression circuit of claim 6, wherein the diodic circuit comprises a first diode circuit and a second diode circuit, the first and second diode circuits are connected in parallel, with the first diode circuit selectively permitting current flow in a first direction and the second diode circuit selectively permitting current flow in a second direction opposite the first direction;
preferably, wherein the first diode circuit comprises a first diode, the second diode circuit comprises a second diode, and a cathode of the first diode connected to an anode of the second diode and an anode of the first diode connected to a cathode of the second diode; and
preferably, wherein the first diode and the second diode have substantially the same forward voltage, which corresponds to the predetermined conductive voltage of the non-linear circuit.

8. The EMI suppression circuit of claim 6, wherein the diodic circuit comprises a first Zener diode and a second Zener diode connected back-to-back and in series; and
preferably, wherein the first Zener diode and the second Zener diode have substantially the same Zener voltage, and the sum of one Zener voltage of the first Zener diode and one forward diode voltage the second Zener diode corresponds to the predetermined conductive voltage of the non-linear circuit.

9. The EMI suppression circuit of any one of claims 6 to 8, wherein the non-linear blocker circuit further comprises an active circuit for boosting a current drive capability of the non-linear blocker circuit, in particular the non-linear circuit; and
preferably, wherein the active circuit comprises a transistor circuit operably connected with the diodic circuit.

10. The EMI suppression circuit of any one of claims 1 to 8, wherein the EMI suppression circuit further comprises: a resistor circuit connected between an input of the amplifier circuit and an output of the amplifier circuit.

11. The EMI suppression circuit of any one of claims 1 to 8, wherein the amplifier circuit comprises an operational amplifier.

12. An AC power circuit comprising one or more EMI suppression circuits of any one of claims 1 to 8.

13. A method for suppressing EMI signals in an AC power circuit, comprising:
sensing, using a sensing means of a EMI suppression circuit, an EMI signal on a power line; and
providing, using a compensation means of the EMI suppression circuit, an EMI compensation signal based on the sensed EMI signal for reducing, or substantially eliminating, the EMI signal on the power line;
wherein the EMI suppression circuit comprises a stabilization circuit for reducing instability caused by interaction of the EMI suppression circuit with inductance in an operation environment associated with the EMI suppression circuit;
preferably, the method further comprising: filtering, using a filtering means of the EMI suppression circuit, AC power frequency and associated harmonics.

14. The method of claim 13, wherein the EMI suppression circuit is the EMI suppression circuit of any one of claims 1 to 8; or
alternatively, wherein the stabilization circuit comprises a non-linear blocker circuit.

15. The method of claim 14, wherein the non-linear blocker circuit comprises a resistor circuit and a non-linear circuit connected in parallel, and the non-linear circuit is arranged to conduct when a voltage across the non-linear circuit is above a predetermined conductive voltage and is arranged to be non-conducting when a voltage across the non-linear circuit is below the predetermined conductive voltage; and
preferably, wherein the non-linear circuit comprises a diodic circuit.
